Europäisches Patentamt

European Patent Office

Office européen des brevets

(19)

(11) Veröffentlichungsnummer: **0 439 676 A1**

(12) **EUROPÄISCHE PATENTANMELDUNG**

(21) Anmeldenummer: 90117713.9

(22) Anmeldetag: 14.09.90

(51) Int. Cl.5: **F16J 15/32**, F16J 15/54

(30) Priorität: 16.01.90 DE 4000986

(43) Veröffentlichungstag der Anmeldung:
07.08.91 Patentblatt 91/32

(84) Benannte Vertragsstaaten:
AT DE ES FR GB IT SE

(71) Anmelder: **Firma Carl Freudenberg**
**Höhnerweg 2-4**
**W-6940 Weinheim/Bergstrasse(DE)**

(72) Erfinder: **Seeh, Reinhold**
**Konrad-Adenauer-Strasse 2**
**W-6940 Weinheim(DE)**

(54) **Dichtung.**

(57) Eine Dichtung für eine Welle (7), umfassend
einen Außenring (1) mit einer radial nach innen geöffneten, umlaufenden Nut (2), die in axialer Richtung beiderseits durch sich senkrecht zur Rotationsachse der Welle (7) erstreckende Stirnflächen (3, 4)
begrenzt ist, wobei die Nut (2) einen radial verschiebbaren Dichtring (5) aus polymerem Werkstoff
umschließt, der die beiden Stirnflächen (3, 4) mit
einem axial vorgespannten, ersten Dichtelement (6)
und die Welle mit einem radial vorgespannten, zweiten Dichtelement (8) dichtend berührt. Der Dichtring
(5) und der Außenring (1) sind durch eine Verdrehsicherung an einer Relativverdrehung gehindert. Di
Verdrehsicherung ist dem ersten Dichtelement (6)
zugeordnet.

EP 0 439 676 A1

Die Erfindung betrifft eine Dichtung für eine Welle, umfassend einen Außenring mit einer radial nach innen geöffneten, umlaufenden Nut, die in axialer Richtung beiderseits durch sich senkrecht zu der Rotationsachse der Welle erstreckende Stirnflächen begrenzt ist, wobei die Nut einen radial verschiebbaren Dichtring aus polymerem Werkstoff umschließt, der die beiden Stirnflächen mit einem axial vorgespannten, ersten Dichtelement und die Welle mit einem radial vorgespannten, zweiten Dichtelement dichtend berührt.

Eine solche Dichtung ist aus der EP-PS 0 112 965 bekannt. Der Dichtring ist dabei statisch ruhend auf der abzudichtenden Welle gelagert und den Stirnflächen der aufnehmenden Nut des Außenringes relativ verdrehbar und radial verschiebbar zugeordnet. Das erzielte Abdichtungsergebnis ist wenig befriedigend.

Der Erfindung liegt die Aufgabe zugrunde, eine solche Dichtung derart weiterzuentwickeln, daß sich ein deutlich verbessertes Abdichtungsergebnis ergibt.

Diese Aufgabe wird erfindungsgemäß bei einer Dichtung der eingangs genannten Art dadurch gelöst, daß der Dichtring und der Außenring durch eine Verdrehsicherung an einer Relativverdrehung gehindert sind und daß die Verdrehsicherung dem ersten Dichtelement zugeordnet ist. Relativbewegungen der Welle in Umfangsrichtung werden hierdurch ausschließlich im Bereich des ersten Dichtelementes abgedichtet, Relativbewegungen in radialer Richtung hingegen ausschließlich im Bereich des zweiten Dichtelementes. Mischformen treten nicht mehr auf und es ist hierdurch möglich, sowohl das erste Dichtelement als auch das zweite Dichtelement so zu gestalten, daß sich in bezug auf die jeweils zu erwartenden Relativbewegungen der Gegenfläche ein ausgezeichnetes Abdichtungsergebnis ergibt.

Die Verdrehsicherung kann durch wenigstens einen säulenförmigen Vorsprung des ersten Dichtelementes oder des Außenringes und eine damit in Eingriff stehende Anschlagfläche des Außenringes oder des ersten Dichtelementes gebildet sein. Der sich hierdurch ergebende Formschluß gewährleistet eine besonders gute Verdrehsicherheit. Hinsichtlich der speziellen Ausbildung ist zu beachten, daß die radiale Relativverschiebbarkeit des Dichtringes in bezug auf den Außenring nicht behindert werden darf. Bei einer axialen Erstreckung des säulenförmigen Vorsprunges bedarf es daher einer Anschlagfläche, deren radiale Ausdehnung zumindest die Größe der zu erwartenden radialen Relativbewegungen aufweist.

Nach einer vorteilhaften Ausgestaltung ist es vorgesehen, daß die Verdrehsicherung durch eine reibschlüssige Verbindung zwischen dem ersten Dichtelement und den Stirnflächen gebildet ist. Die Herstellung der Dichtung ist in diesem Falle wesentlich vereinfacht.

Das erste Dichtelement berührt die ihm zugeordneten Stirnflächen der aufnehmenden Nut stets im Bereich eines größeren Durchmessers als das zweite Dichtelement die Oberfläche der abzudichtenden Welle. Darüber hinaus sind im Bereich des ersten Dichtelementes zwei einander gegenüberliegende Gegenflächen vorhanden, während das zweite Dichtelement die Oberfläche der abzudichtenden Welle nur im Bereich einer einzigen Umfangsfläche berührt. Bereits bei einer übereinstimmenden Anpressung in beiden Bereichen ist es hierdurch mit ausreichender Sicherheit gewährleistet, daß sich die dynamische Abdichtung der in einer Drehbewegung befindlichen Welle auf den Bereich des zweiten Dichtelementes beschränkt, während der Dichtring als solcher der Drehbewegung nicht folgt sondern lediglich bei radialen Relativverlagerungen eine entsprechende Radialverschiebung in der aufnehmenden Nut des Außenringes erfährt. Eine besonders große Sicherheit hinsichtlich des diesbezüglich angestrebten Effektes wird erreicht, wenn im Bereich des ersten Dichtelementes eine größere Anpressung wirksam ist als im Bereich des zweiten Dichtelementes und möglichst eine Anpressung des ersten Dichtelementes an die ihm zugeordneten Stirnflächen der aufnehmenden Nut, die wenigstens doppelt so groß ist wie die Anpressung des zweiten Dichtelementes an die Oberfläche der abzudichtenden Welle. Der Dichtring besteht überwiegend aus polymerem Werkstoff und damit aus einem Material, das Relaxationserscheinungen aufweisen kann.

Unter diesem Gesichtspunkt hat es sich als vorteilhaft bewährt, wenn die Vorspannung im Bereich des ersten Dichtelementes im wesentlichen durch die Eigenelastizität des das erste Dichtelement mit einem U-förmigen Profil umschließenden Außenringes bewirkt ist. Zweckmäßigerweise besteht dieser aus Metall und damit aus einem Material, das resistent gegen Relaxationserscheinungen ist. Über lange Zeiträume wird hierdurch eine weitgehend ausgeglichene Anpressung der die Nut begrenzenden Stirnflächen an die ihnen axial gegenüberliegenden Gegenflächen des ersten Dichtelementes bewirkt.

Das die Welle abdichtende, zweite Dichtelement kann mit einer Dichtlippe versehen sein, die im Sinne der Deutschen Industrie Norm (DIN) 37 60 gestaltet ist. Die Dichtlippe wird bei solchen Ausführungen durch eine metallische Ringwendelfeder an die Oberfläche der abzudichtenden Welle angepreßt, was weitgehend unabhängig von der sich ergebenden Umgebungstemperatur und der Gebrauchsdauer ein befriedigendes Abdichtungsergebnis gewährleistet.

In den durch das erste und das zweite Dichtelement gebildeten Dichtring kann ein Versteifungsring aus einem Hartwerkstoff, zweckmäßig aus einem metallischem Werkstoff, eingebettet sein, der sich in das Profil der beiden Dichtelemente hineinerstreckt. Die Formbeständigkeit des Dichtringes erfährt hierdurch eine deutliche Verbesserung, insbesondere in Fällen, in denen der Versteifungsring im Bereich seines Innen- und seines Außenumfanges mit einstückig angeformten, in axialer Richtung vorstehenden Ringvorsprüngen versehen ist. Die Verwendung von Versteifungsringen aus gegebenenfalls faserverstärkten, duroplastischen Werkstoffen ist ebenfalls möglich.

Eine reibschlüssige Verdrehsicherung des Dichtringes von besonders guter Dauerhaftigkeit läßt sich erreichen, wenn das erste Dichtelement in den Zwischenzonen zwischen dem Versteifungsring und den Stirnflächen jeweils als Schicht in gestaltet ist, die in axialer Richtung eine Erstreckung aufweist, die wenigstens so groß ist wie die Erstreckung in radialer Richtung. Unzulässig großen, plastischen Deformierungen des das erste Dichtelement in der Zwischenzone bildenden, polymeren Werkstoffes läßt sich hierdurch begegnen.

Eine gute Führung des Dichtringes in der aufnehmenden Nut des Außenringes läßt sich erzielen, wenn das erste Dichtelement mit in axialer Richtung beiderseits vorstehenden Stützbunden versehen ist. Das die eigentliche Abdichtung bewirkende Dichtelement kann radial außerhalb davon vorgesehen sein und beispielsweise aus zumindest einer Dichtlippe bestehen, welche an wenigstens eine der Stirnflächen der Nut dichtend angepreßt ist.

Um bei größeren Radialbewegungen der abzudichtenden Welle eine Beschädigung der Dichtlippe des zweiten Dichtelementes zu verhindern und insbesondere eine Veränderung der relativen Zuordnung der Dichtlippe zu der Oberfläche der abzudichtenden Welle hat es sich als vorteilhaft bewährt, wenn der Dichtring in der Zwischenzone der Stirnflächen radial innenseitig durch eine der Welle zugeordnete Führungsfläche begrenzt ist. Der Durchmesser der Führungsfläche kann geringfügig größer sein als der Durchmesser der Welle. Unter normalen Betriebsbedingungen ergibt sich in diesem Falle zwischen der Führungsfläche und der Oberfläche der abzudichtenden Welle kein Berührungskontakt, was einen Verschleiß im Bereich des Führungsringes weitgehend ausschließt. Treten hingegen in radialer Richtung Relativverlagerungen der abzudichtenden Welle auf, so bewirken diese solange eine Relativverlagerung des Dichtringes in der aufnehmenden Nut des Außenringes in radialer Richtung, bis Radialkräfte auf den Dichtring nicht mehr übertragen werden. Auch bei einer radialen Relativverlagerung der abzudichtenden Welle ist hierdurch stets eine konzentrische Zuordnung des Dichtringes zu deren Oberfläche gewährleistet.

Der Führungsfläche können mit der Welle in ständigem Eingriff stehende Dichtlippen des zweiten Dichtelementes beiderseits benachbart sein. Dem Eindringen von Fremdkörpern in die Zwischenzone zwischen der Führungsfläche und der Welle wird hierdurch begegnet.

Der Gegenstand der Erfindung wird nachfolgend anhand der in der Anlage beigefügten Zeichnung weiter verdeutlicht:

Die gezeigte Dichtung ist für eine sich drehenden Welle 7 bestimmt, bei der während der bestimmungsgemäßen Verwendung Relativverlagerungen in radialer Richtung auftreten können. Um diese Relativverlagerungen sicher aufzufangen ist der Außenring 1 der Dichtung mit einer radial nach innen geöffneten, umlaufenden Nut 2 versehen, die in axialer Richtung beiderseits durch sich im wesentlichen senkrecht zur Rotationsachse der Welle 7 erstreckende Stirnflächen 3 4 begrenzt ist. Der Außenring 1 besteht aus Stahlblech und ist so dimensioniert, daß sich eine elastische Anpressung der beiden in radialer Richtung nach innen vorstehenden Schenkel des Profils an das von der Nut 2 umschlossene, erste Dichtelement 6 ergibt. Das Dichtelement 6 bildet einen Bestandteil des Dichtringes 5, der radial verschiebbar in der Nut 2 aufgenommen ist. Dieser besteht aus gummielastischem Werkstoff und ist mit einem eingebetteten Versteifungsring 11 aus Stahlblech versehen, der im Bereich seines Innen- und Außendurchmessers mit in axialer Richtung vorstehenden Ringvorsprüngen 12 versehen ist. Der Dichtring 5 ist hierdurch hinsichtlich seiner Gestalt sehr formbeständig.

Der Dichtring 5 wird im Bereich des ersten Dichtelementes 6 in axialer Richtung beiderseits durch Stützbunde 13 begrenzt, welche die Stirnflächen 3, 4 der Nut 2 anliegend berühren. Radial außerhalb der Stützbunde 13 ist jeweils eine radial nach außen vorstehende Dichtlippe 9 vorgesehen, welche die Stirnflächen 3, 4 der Nut 2 unter einer elastischen Vorspannung dichtend berühren.

Das erste Dichtelement 8 ist mit einer Dichtlippe versehen, die nach Art der Deutschen Industrie Norm (DIN) 37 60 gestaltet ist und eine Dichtlippe aufweist, die durch eine Ringwendelfeder 10 aus metallischem Werkstoff mit einer elastischen Vorspannung an den Außenumfang der abzudichtenden Welle 7 angepreßt ist.

Radial innerhalb der Zwischenzone der Stirnflächen 3, 4 des Außenringes 1 ist im Bereich des zweiten Dichtelementes eine Führungsfläche 14 vorgesehen. Diese ist in axialer Richtung gewellt und mit einem Innendurchmesser versehen, der geringfügig größer ist als der Außendurchmesser der abzudichtenden Welle 7.

Das zweite Dichtelement 8 ist auf der von der Dichtlippe abgewandten Seite mit einer Staublippe versehen, welche die Oberfläche der abzudichtenden Welle anliegend berührt. Sie kann hinsichtlich ihrer Ausbildung ebenfalls den bekannten Normen entsprechen.

Von entscheidender Bedeutung ist es bei der gezeigten Ausführung, daß im Bereich des ersten Dichtelementes 6 eine umfangsgerichtete Reibkraft wirksam ist, die die in Umfangsrichtung wirksame Reibkraft zwischen dem zweiten Dichtelement und der Welle 7 übersteigt, zweckmäßig um wenigstens das Doppelte. Umfangsgerichtete Relativbewegungen der abzudichtenden Welle werden hierdurch ausschließlich im Bereich des zweiten Dichtelementes abgedichtet, radial gerichtete Relativbewegungen der abzudichtenden Welle 7 ausschließlich im Bereich des ersten Dichtelementes 6. In beiden Bereichen beruhen die Vorspannungen maßgeblich auf der Elastizität metallischer Werkstoffe, nämlich zum einen auf derjenigen des metallischen Außenringes 1 und zum anderen auf derjenigen der metallischen Ringwendelfeder 10.

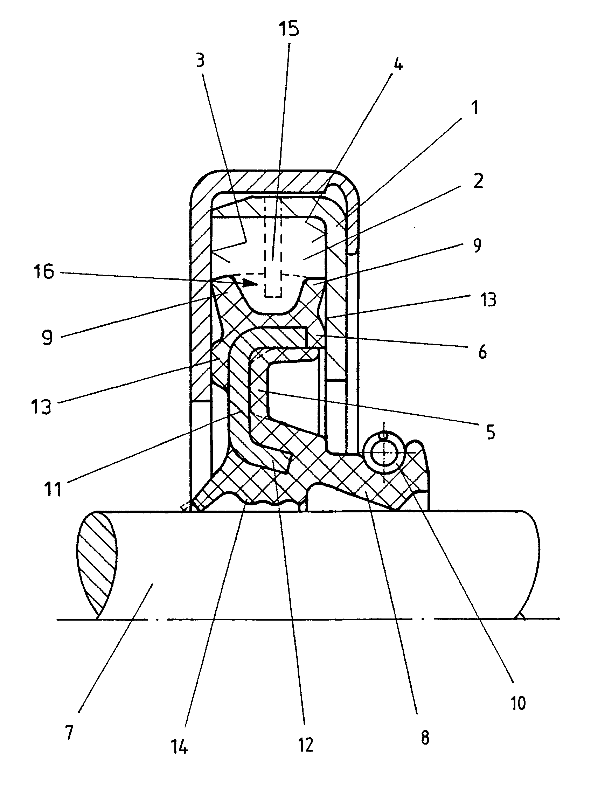

Anhand gestrichelter Linienzüge ist in der beigefügten Zeichnung eine alternative Ausführungsform einer Verdrehsicherung angedeutet. Diese ist formschlüssiger Art und umfaßt einen in radialer Richtung nach innen weisenden, säulenförmigen Vorsprung 15 des Außenringes 1, der mit einer sich in radialer Richtung erstreckenden Anschlagfläche 16 des Dichtringes 5 in Eingriff steht. Die Anschlagfläche 16 wird durch eine sich parallel zur Dichtungsachse erstreckende Fläche einer Rippe gebildet, die zugleich die Dichtlippen des ersten Dichtelementes aufeinander abstützt. Die gegenseitige, axiale Verpressung zwischen den Stirnflächen 3, 4 und dem ersten Dichtelement 6 läßt sich durch die Verwendung einer solchen, formschlüssigen Verdrehsicherung reduzieren, was die Erzielung einer besonders guten Beweglichkeit des Dichtelementes 5 in radialer Richtung begünstigt. Der Vorsprung 15 kann bedarfsweise auch ein Bestandteil des Dichtringes 5 bilden und mit einer Anschlagfläche in Eingriff stehen, die einen Bestandteil des Außenringes 1 bildet. Eine Verdrehsicherung dieser Art ist dadurch über lange Zeiträume und weitgehend temperaturunabhängig gleichbleibend verfügbar, was einen hohen Gebrauchswert der vorgeschlagenen Dichtung gewährleistet.

## Patentansprüche

1. Dichtung für eine Welle, umfassend einen Außenring mit einer radial nach innen geöffneten, umlaufenden Nut, die in axialer Richtung beiderseits durch sich senkrecht zur Rotationsachse der Welle erstreckende Stirnflächen begrenzt ist, wobei die Nut einen radial verschiebbaren Dichtring aus polymerem Werkstoff umschließt, der die beiden Stirnflächen mit einem axial vorgespannten, ersten Dichtelement und die Welle mit einem radial vorgespannten, zweiten Dichtelement dichtend berührt, dadurch gekennzeichnet, daß der Dichtring (5) und der Außenring (1) durch eine Verdrehsicherung an einer Relativverdrehung gehindert sind und daß die Verdrehsicherung dem ersten Dichtelement (6) zugeordnet ist.

2. Dichtung nach Anspruch 1, dadurch gekennzeichnet, daß die Verdrehsicherung durch wenigstens einen säulenförmigen Vorsprung (15) des ersten Dichtelementes (6) oder des Außenringes (1) sowie eine damit in Eingriff stehende Anschlagfläche (16) des Außenringes (1) oder des ersten Dichtelementes (6) gebildet ist.

3. Dichtung nach Anspruch 1, dadurch gekennzeichnet, daß die Verdrehsicherung durch eine reibschlüssige Verbindung zwischen dem ersten Dichtelement (6) und den Stirnflächen (3, 4) gebildet ist.

4. Dichtung nach Anspruch 3, dadurch gekennzeichnet, daß der Außenring (1) aus metallischem Werkstoff besteht und daß die Stirnflächen (3, 4) zur Bildung der reibschlüssigen Verbindung im wesentlichen durch eine elastische, axial gerichtete Vorspannung des Profils des Außenringes (1) an das erste Dichtelement (6) angedrückt sind.

5. Dichtung nach Anspruch 1 bis 4, dadurch gekennzeichnet, daß der Dichtring (5) mit einem in das erste und das zweite Dichtelement (6, 8) eingreifenden Versteifungsring (11) aus einem Hartwerkstoff versehen ist.

6. Dichtung nach Anspruch 5, dadurch gekennzeichnet, daß der Versteifungsring (11) im Bereich seines Innen- und Außenumfanges mit einstückig angeformten, in axialer Richtung vorstehenden Ringvorsprüngen (12) versehen ist.

7. Dichtung nach Anspruch 1 - 6, dadurch gekennzeichnet, daß das erste Dichtelement (6) in der Zwischenzone zwischen dem Versteifungsring (11) und den Stirnflächen (3, 4) jeweils Schicht gestaltet ist und daß die Schicht in axialer Richtung eine Erstreckung aufweist, die wenigstens so groß ist wie die Erstreckung in radialer Richtung.

8. Dichtung nach Anspruch 1 bis 7, dadurch gekennzeichnet, daß das erste Dichtelement (6) wenigstens eine mit einer der Stirnflächen (3, 4) in Eingriff stehende Dichtlippe (9) aufweist.

9. Dichtung nach Anspruch 1 - 8, dadurch gekennzeichnet, daß der Dichtring (5) in der Radialebene des Zwischenraumes zwischen den Stirnflächen (3, 4) radial innenseitig durch eine der Welle zugeordnete Führungsfläche (14) begrenzt ist.

**Europäisches Patentamt**

# EUROPÄISCHER RECHERCHENBERICHT

Nummer der Anmeldung

**EP 90 11 7713**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-C-9 530 29 (GOETZEWERKE)<br>* Ganzes Dokument *<br>– – – | 1,2,4-6,8,9 | F 16 J 15/32<br>F 16 J 15/54 |
| X | DE-U-8 802 162 (PREZETAK)<br>* Ganzes Dokument *<br>– – – | 1,3,4,8,9 | |
| A | US-A-4 147 367 (SMITH)<br>* Spalte 3, Zeile 4 - Spalte 5, Zeile 19; Figuren 1-8 *<br>– – – | 1,2,8 | |
| · A | FR-A-1 448 933 (KOPPERS)<br>* Ganzes Dokument *<br>– – – | 1 | |
| A | US-A-2 186 537 (SALISBURY)<br>* Ganzes Dokument *<br>– – – – – | 1 | |

| | RECHERCHIERTE SACHGEBIETE (Int. Cl.5) |
|---|---|
| | F 16 J |

Der vorliegende Recherchenbericht wurde für alle Patentansprüche erstellt

| Recherchenort | Abschlußdatum der Recherche | Prüfer |
|---|---|---|
| Den Haag | 22 April 91 | LEGER M.G.M. |